(19) Europäisches Patentamt
European Patent Office
Office européen des brevets

(11) Numéro de publication : **0 505 236 A2**

(12) **DEMANDE DE BREVET EUROPEEN**

(21) Numéro de dépôt : **92400619.0**

(22) Date de dépôt : **10.03.92**

(51) Int. Cl.$^5$ : **G06F 15/80,** G05B 13/02

(30) Priorité : **18.03.91 US 670738**

(43) Date de publication de la demande :
**23.09.92 Bulletin 92/39**

(84) Etats contractants désignés :
**DE FR GB IT NL SE**

(71) Demandeur : **THOMSON-CSF**
**51, Esplanade du Général de Gaulle**
**F-92800 Puteaux (FR)**

(72) Inventeur : **Schley, Charles H.**
**THOMSON-CSF, SCPI, Cédex 67**
**F-92045 Paris la Défense (FR)**
Inventeur : **Chauvin, Yves**
**THOMSON-CSF, SCPI, Cédex 67**
**F-92045 Paris la Défense (FR)**
Inventeur : **Van Henkle, L.**
**THOMSON-CSF, SCPI, Cédex 67**
**F-92045 Paris la Défense (FR)**
Inventeur : **Golden, Richard**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) **Réseaux neuronaux structurés pour le contrôle de systèmes complexes.**

(57) Le dispositif destiné au contrôle de systèmes complexes comporte :
— des moyens d'entrée fournissant des signaux caractéristiques de l'état courant du système complexe, ces signaux étant issus de capteurs,
— plusieurs blocs contrôleurs élémentaires, chaque bloc élémentaire recevant en entrée les signaux issus des capteurs et délivrant des signaux de sortie obtenus par pondération de chacun des signaux d'entrée,
— et un moyen de sommation pour sommer les sorties des blocs élémentaires, pour obtenir des signaux de contrôle consistant en des sommes pondérées de toutes les valeurs d'entrées des contrôleurs.
Application au contrôle de la trajectoire d'un avion durant les dernières phases de la ligne de vol.

FIG. 3

EP 0 505 236 A2

Cette invention concerne un système général comportant des réseaux neuronaux destiné au contrôle de différents systèmes complexes. Le réseau est capable d'apprendre à partir d'exemples. L'une des applications particulières de ce type de structure de contrôle pourrait être un équipement d'atterrissage automatique pour l'aviation commerciale. Pour être précis, il existe des problèmes au niveau des pilotes automatiques et des systèmes de contrôle classiques des avions, en particulier de ceux de type commercial, puisque les systèmes classiques sont limités dans leur capacité à contrôler l'appareil pendant, par exemple, le radioalignement de descente et la phase d'arrondi, dans la partie contact avec le sol du profil de vol, en particulier en cas de rafales de vent ou autres conditions dépassant la les possibilités opérationnelles du contrôle classique des avions.

Par conséquent, l'un des objets de l'invention consiste à réaliser un contrôleur comportant un réseau neuronal adaptatif, capable de contrôler la trajectoire d'un avion durant les deux dernières phases de la ligne de vol (radioalignement de descente et arrondi), et ce, à la fois en conditions normales, mais aussi dans des situations habituellement non couvertes par les contrôleurs classiques.

Un objet complémentaire de la présente invention est de réaliser un contrôleur capable à la fois d'apprendre le niveau des gains de contrôle nécessaires pour un fonctionnement optimum, et d'apprendre les plans de gains adaptés à une tâche, dans un environnement non linéaire. Ceci déboucherait sur un contrôleur commun plus adaptable.

Néanmois, un autre objet de la présente invention consiste à réaliser un système de contrôle amélioré, capable de contrôler un avion dans des conditions de vent extrêmes, et ayant une performance comparable ou supérieure à celle des systèmes "traditionnels" de type atterrissage automatique, tout en conservant des contraintes acceptables pour les caractéristiques des réponses.

Cependant, un dernier objet de l'invention est de réaliser un dispositif effectuant des fonctions ayant des composantes proportionnelles, intégrales et dérivées (PID), capable de contrôler des variables multiples dans un système non linéaire complexe tel que le radioalignement de descente et l'arrondi d'un avion.

On pourra pleinement apprécier l'invention, ainsi que de nombreux avantages qui en découlent, en la comprenant mieux grâce à la description détaillée qui va suivre, étayée par les schémas joints :

La Figure 1 est une vue générale d'un avion, montrant les forces qui s'exercent sur celui-ci.

La Figure 2 est une représentation graphique d'un profil de vol pour l'appareil de la Figure 1 durant la dernière partie de son vol.

La Figure 3 représente graphiquement une réalisation de la présente invention.

La Figure 4 est une architecture générale du contrôleur à réseau neuronal, selon l'invention.

La Figure 5 est un schéma représentant un réseau contrôleur élémentaire à deux unités issu d'une réalisation de la présente invention.

La Figure 6 est une autre représentation d'un bloc contrôleur élémentaire.

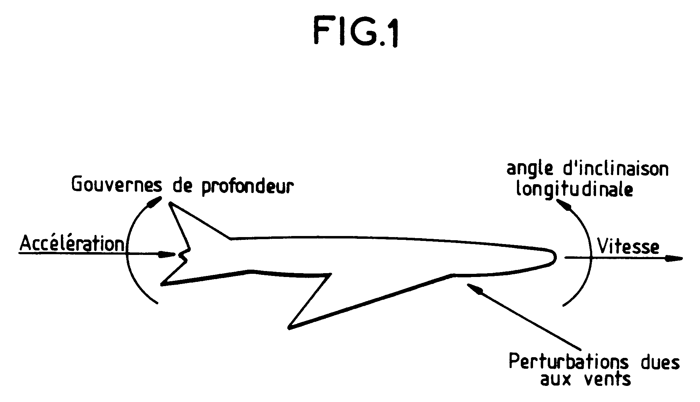

Comme l'indique la Figure 1, on associe à un avion type dans cet environnement certaines variables contrôlées telles que la vitesse et l'angle d'inclinaison longitudinale. Il peut être soumis à des perturbations dues aux vents. Il a également des signaux de contrôle comme les réglages d'accélération et les gouvernes de profondeur. Il faut noter que le lacet et le roulis n'ont pas été considérés dans cette équation afin de la simplifier. Les gouvernes de profondeur modifient l'angle d'inclinaison longitudinale de l'avion ; la régulation de ces surfaces est définie par le système de stabilisation, lui-même commandé par le contrôleur neuronal objet de cette invention.

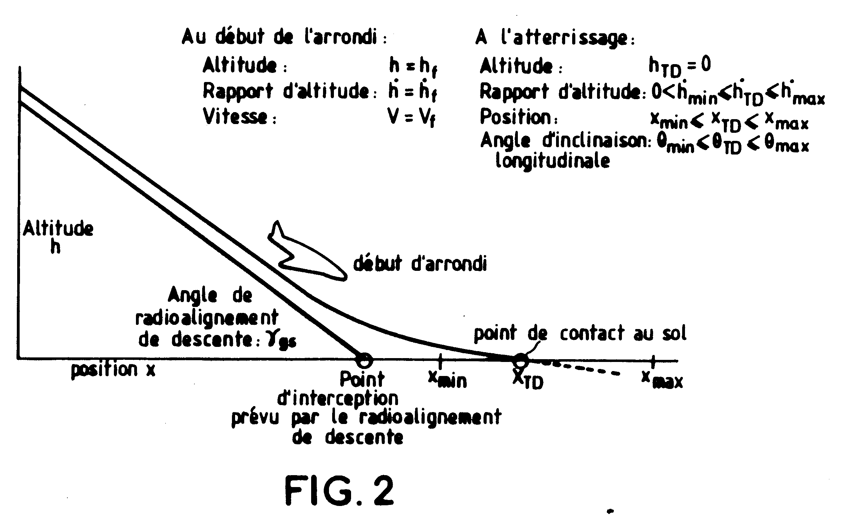

Pendant l'atterrissage d'un avion, la trajectoire de vol des deux phases finales comprend une trajectoire d'atterrissage appelée "radioalignement de descente" et une "phase d'arrondi". La Figure 2 présente ces deux phases. L'arrondi intervient généralement à environ 45 pieds AGL (Above Ground Level - au-dessus du sol). Au début de l'arrondi, ceci peut être modelisé mathématiquement, l'altitude étant $h = h_F$, le rapport d'altitude étant défini comme

$\dot{h} = \dot{h}_F$ et la vitesse $V = V_F$ alors que, au contact au sol, l'altitude est évidemment $h_{TD} = 0$ ; le rapport d'altitude idéal est

$\dot{h}_{min} \leqq \dot{h}_{TD} \leqq \dot{h}_{max}$, la position étant $X_{min} \leqq X_{TD} \leqq X_{max}$ avec l'angle d'inclinaison longitudinale $\Theta_{min} \leqq \Theta_{TD} \leqq \Theta_{max}$. Ce qui est représenté à la Figure 2.

De manière idéale, le radioalignement de descente est caractérisé par la pente descendante linéaire, l'arrondi étant une exponentielle négative. Lorsque l'avion atteint le point adéquat pour commencer l'arrondi, les caractéristiques de sa réponse sont modifiées pour le rendre réceptif aux interventions du pilote ; il est donc évident que le processus n'est pas linéaire sur la totalité de la trajectoire. Ceci est vrai en particulier si les conditions de vent sont plus mauvaises que la situation idéale (c'est-à-dire des vents de vitesse constante).

Les équations mathématiques du mouvement représentant l'appareil en vol peuvent être dérivées dans un sens général à partir de la mécanique de Newton linéarisée. A titre d'exemple, les paramètres d'aérodynamique et des surfaces de contrôle pour les avions commerciaux classiques Boeing 747 sont utilisés dans cette étude. Cependant, pour toute personne ayant une compétence normale dans cette discipline, il est évident que ce contrôleur peut être utilisé pour d'autres avions commerciaux et, en fait, peut servir pour des applications autres que le contrôle d'un avion.

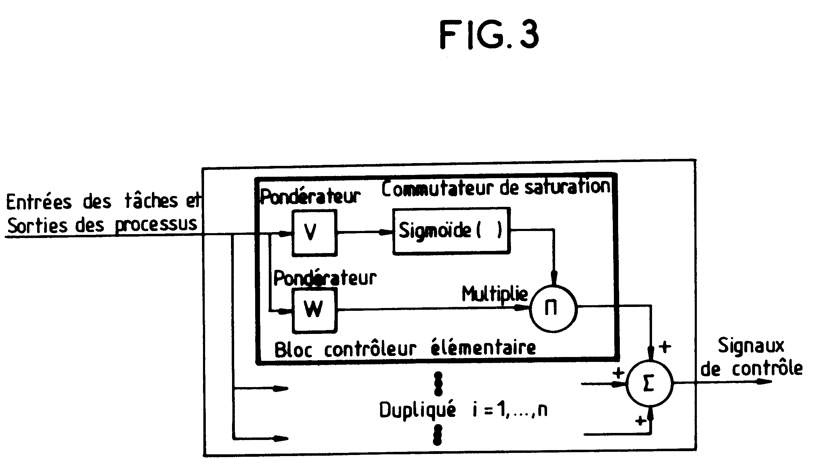

Les systèmes automatiques de stabilisation et d'automanette ont été ajoutés à un modèle brut de cellule d'avion pour fournir un amortissement adéquat et une vitesse de réponse applicables à la dynamique principale de l'appareil (c'est-à-dire vitesse, phugoïde et réponse rapide). Les commandes d'altitude désirée sont basées sur un enchaînement idéalisé d'un système normal d'atterrissage aux instruments (ILS) avec une vitesse au sol adaptable, la loi d'arrondi exponentielle étant utilisée afin d'obtenir un descente douce. Les rafales en altitude des vents transversaux et des turbulences peuvent être modélisées à l'aide d'une distribution de Dryden ('Frozen field model' pour générer des vents de test). On utilise un réseau neuronal général tel que celui de la Figure 3, comportant 1 à n blocs contrôleurs élémentaires cumulés. Les entrées de chacun des blocs contrôleurs élémentaires consisteront généralement en mesures de l'altitude de l'avion et de l'altitude calculée désirée pour l'avion ; à partir de ces entrées, le réseau neuronal déterminera l'angle d'inclinaison longitudinale désiré, utilisé par l'avion pour définir le réglage des gouvernes de profondeur, réglage lui-même utilisé pour modifier l'angle d'inclinaison pendant le déplacement en l'air de l'avion alors qu'il poursuit sa phase d'atterrissage.

Il doit être clair que le contrôle de l'avion pendant ces phases est "non linéaire" ou "multimodal". C'est-à-dire que le comportement change de manière fondamentale en fonction de la position dans l'espace des états. Dans la pratique, les contrôleurs généraux sont souvent conçus pour ce type de système en étant traités comme un ensemble de systèmes linéaires, chacun d'eux étant linéarisé à l'approche d'un "point de référence" dans l'espace des états. Un contrôleur linéaire peut donc être déterminé séparément pour chacun des "modes" du système. Ces opérations suggèrent qu'une approche raisonnable de contrôle des systèmes non linéaires ou multimodaux serait de concevoir une loi de contrôle "multimodale".

Cette invention concerne une architecture de réseau neuronal général, capable de contrôler diverses machines non linéaires ou multimodales. Le réseau est composé de cartes dynamiques, parallèles et linéaires déclenchées par des portes non linéaires. L'architecture de la présente invention, capable de fournir une loi de contrôle générale, est présentée à la Figure 3. Des entrées de tâches et des sorties de processus sont entrées dans plusieurs blocs contrôleurs élémentaires qui sont reproduits plusieurs fois, comme l'indique la Figure 3. Chaque bloc contrôleur élémentaire définit d'abord une somme pondérée des entrées de tâches et sorties de processus (multiplication par le pondérateur W au sein de chaque bloc).

Puis le niveau auquel la somme pondérée est transmise par le bloc est modifié via les fonctions du commutateur de saturation et du multiplicateur. Il faut noter que le commutateur de saturation et le multiplicateur peuvent être réalisés numériquement dans un seul processeur, ce dernier pouvant multiplexer entre les blocs contrôleurs élémentaires ou bien être un circuit particulier fourni pour chacun des blocs contrôleurs élémentaires ou toute combinaison de ceux-ci. De plus, les blocs élémentaires peuvent être séparés, un ou plusieurs étant mis en oeuvre par un processeur numérique unique et d'autres groupes étant mis en oeuvre par un autre processeur numérique.

Les entrées reçues par le commutateur lui-même est une autre somme pondérée des entrées de tâches et sorties de processus (multiplication par le pondérateur V). Si l'entrée du commutateur de saturation est grande, sa sortie sera l'unité, et la somme pondérée (par W) sera transmise inchangée. A l'opposé, si le commutateur de saturation a une sortie égale à zéro, la somme pondérée des entrées de tâches et sorties de processus n'apparaîtra pas en sortie, quel que soit le niveau de ces entrées-sorties. Lorsque ces blocs contrôleurs élémentaires sont dupliqués de 1 à n fois et leurs sorties additionnées, le signal de contrôle consiste alors en la somme pondérée de toutes les entrées des contrôleurs. De plus, ces sorties pondérées peuvent être triées et/ou mélangées par les commutateurs de saturation afin de produire les signaux de contrôle qui en découlent. L'effet global est un contrôleur alimenté directement par les tâches et par contre-réaction par les sorties de processus, avec des gains sélectionnés et des chemins multiples où le gain total équivalent dépend des tâches et des sorties de processus. L'architecture obtenue produit une unité de traitement sigma-pi (somme des produits) dans le contrôleur final.

Il faut noter que le contrôleur de la Figure 3 est composé de multiples chemins de calcul parallèles et peut donc être installé avec des équipements parallèles (analogique, numérique ou hybride) afin d'accélérer les calculs. De plus, en l'installant avec ce mode de calculs multiples parallèles, si un ou plusieurs de ces chemins venaient à être défaillants, un niveau de tolérance d'erreur serait appliqué de façon que la perte d'un seul ou même de plusieurs contrôleurs ne désactive pas entièrement le système tant qu'un chemin existe (bien que son mode soit quelque peu dégradé). En outre, comme le contrôleur peut sélectionner une ou plusieurs configurations pondérées, il est possible de fonctionner en plusieurs modes, selon la situation du processus à contrôler ou selon les conditions environnementales. Cette propriété peut déboucher sur la capacité du contrôleur à être très précisément harmonisé avec un processus ayant plusieurs régimes de comportement (c'est-à-dire un processus non linéaire).

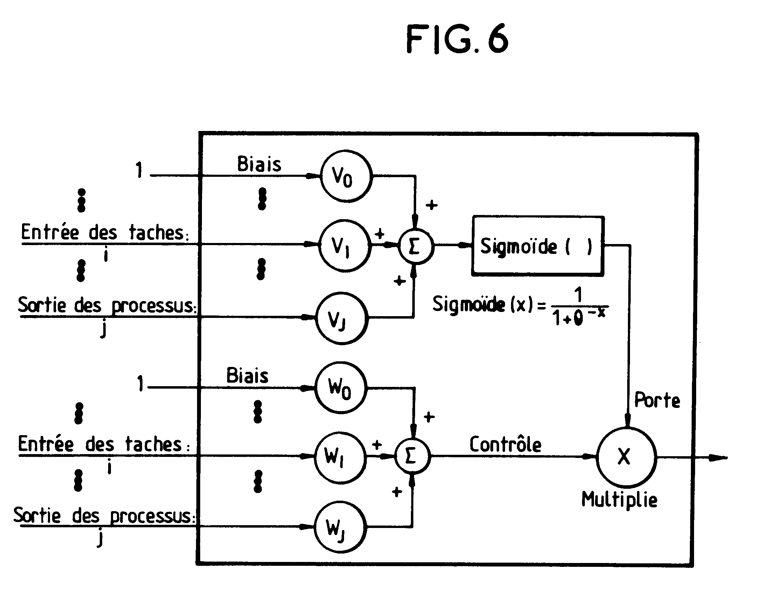

Le pondérateur que fournit chaque bloc contrôleur élémentaire, comme indiqué à la Figure 3, peut être une constante et représenter une relation statique entre l'entrée et la sortie. Comme le montre la Figure 6, on peut obtenir d'autres fonctionnalités du contrôleur en considérant les pondérateurs $V_i$ et $W_i$ comme mettant en oeuvre des relations dynamiques. On entend par là la capacité de tenir compte du temps (historique, expérience présente, capacité de prévoir l'avenir). Par exemple, une contre-réaction PID peut être utilisée pour s'assurer que la sortie du processus suit l'entrée de tâche de manière proche et suffisamment stable. Les aspects proportionnels concerne l'instant présent, l'intégrale traitera l'accumulation des données historiques sur une période de temps définie, et la dérivée fournira les prévisions. Une relation PID peut être exprimée de plusieurs manières. Parmi les modes d'expression possibles, on peut faire appel à une transformation de Laplace utilisée dans les filtres standards et dans les équations différentielles. En tant qu'équation différentielle, la relation PID peut être écrite comme suit :

$$\frac{dy}{dt} = K_p x + K_i \int x\,dt + K_d \frac{dx}{dt} \quad \text{où} \quad \frac{d}{dt}$$

est une dérivée par rapport au temps, x(t) est une entrée et y(t) serait la sortie, les deux étant fonction du temps t. Les coefficients de proportionnalité $K_p$, de l'intégrale $K_i$ et de la dérivation $K_d$ sont les pondérateurs réels à ajuster durant la conception du contrôleur.

Par conséquent, les pondérateurs $V_i$ et $W_i$ peuvent exprimer une large gamme de fonctionnalités complexes selon la tâche de contrôle à effectuer et la dynamique de la machine. A partir de cela, il est évident que le contrôleur présenté ici est applicable à des machines autres qu'un avion et, plus particulièrement dans l'aviation, uniquement à la phase d'atterrissage.

Comme on peut le comprendre d'après les Figures 1 et 2, l'étude de cette invention concerne uniquement le radioalignement de descente et la partie arrondi du système d'atterrissage automatique ; elle n'aborde aucun dispositif de contrôle latéral tel que le lacet et le roulis qui, bien entendu, peuvent être mis en oeuvre de manière identique au radioalignement de descente et à l'arrondi. De plus, on ne considère pas de filtres complémentaires de capteurs bien qu'il doive être clair qu'une modélisation des effets de ces filtres est nécessaire. Dans une approche classique, les contrôleurs sont souvent cités en tant que dispositifs PID à la fois pour les modes de radioalignement de descente et d'arrondi. Hormis les valeurs des paramètres et la commande d'autocabrage en boucle ouverte pour l'arrondi, ces deux contrôleurs peuvent être construits de manière identique.

Pour les besoins de cet exposé, l'état de l'avion (y compris les systèmes automatiques de stabilisation et d'automanette) peut être représenté par le vecteur à 8 dimensions suivant :

$$X_t = [u_t\, \alpha_t\, q_t\, \Theta_t\, \dot{h}_t\, h_t\, x7_t\, x8_t]^T \quad [1]$$

Les variables d'état $u_t$, $\alpha_t$, $q_t$, $\Theta_t$, $\dot{h}_t$ et $h_t$ correspondent aux variables d'état de l'avion représentant la vitesse, l'angle d'attaque, le taux d'angle d'inclinaison longitudinale, le rapport d'altitude et l'altitude. La variable $x7_t$ provient d'un dispositif classique d'automanette (non traité ici). La variable $x8_t$ calcule l'intégrale de l'écart entre l'altitude réelle $h$ et l'altitude désirée $h_{cmd}$ sur la totalité de la trajectoire de vol.

Ou bien, les variables d'état $\dot{h}_t$ et $x8_t$ peuvent être considérées comme internes au réseau contrôleur (cf. ci-dessous). Les équations des écarts décrivant la dynamique de la machine contrôlée peuvent s'écrire ainsi :

$$X_{t+1} = A_t X_t + B_t U_t + CD_t + N_t \quad [2]$$
$$A_t = Z_t A^{gs} + (1 - Z_t)A^{f1} \quad [3]$$
$$B_t = Z_t B^{gs} + (1 - Z_t)B^{f1} \quad [4]$$
$$Z_t = S((h_t - h_f)\sigma_f) \quad [5]$$
$$S(x) = 1/(1 + \exp(-x)) \quad [6]$$

où $A$ représente la dynamique de la machine, et $B$ la réponse de l'avion au contrôle $U$. La matrice $C$ est utilisée pour calculer $x8$ à partir de l'état désiré $D$, contenant l'altitude, le rapport d'altitude et la position au sol désirés, tels qu'ils sont obtenus des trajectoires nominales de radioalignement de descente et d'arrondi. $N$ représente les bruits supplémentaires calculés à partir du modèle des vents. Les matrices $A^{gs}$, $A^{f1}$, $B^{gs}$ et $B^{f1}$ sont constantes. La variable $z_t$ crée une transition sans à-coup entre les dynamiques de radioalignement de descente et d'arrondi, tout en permettant de différencier la fonction de coût $J$ tout le long de la trajectoire de vol.

Le contrôleur à commutation représenté à la Figure 3 peut être modélisé mathématiquement comme suit :

$$U_t = P^T_t\, L_t \quad \text{où} \quad P_t = S([VX_t + q]\sigma)$$
$$\text{et} \quad L_t = W[X_t + RD_t] + r \quad [7]$$

où la fonction $S(x)$ est la fonction logistique $1/(1 + \exp(-x))$ prise pour chaque élément du vecteur $x$, et $\sigma$ est un paramètre de descente associé. La matrice de pondération $V$ relie l'altitude réelle $h$ à chaque unité de commutation dans $P_t$ (le commutateur est statique). La matrice de pondération $W$ relie l'erreur d'altitude, l'erreur de rapport d'altitude et l'erreur d'intégrale d'altitude à chaque unité linéaire dans $L_t$.

La mise en oeuvre du contrôleur est telle que chaque unité calcule une représentation linéaire de $(h_t - h_{cmd(t)})$, $x8_t$ et de
$(\dot{h}_t - \dot{h}_{cmd(t)})$.
Ainsi, le réseau contrôleur crée une pondération dynamique PID de l'erreur d'altitude $(h_t - h_{cmd(t)})$.

A l'origine, si l'on doit utiliser deux blocs contrôleurs élémentaires du type de la Figure 3 pour représenter un contrôleur de radioalignement de descente et d'arrondi, la sélection sigmoïdale pour chaque bloc sera basée uniquement sur l'altitude. De cette façon, il existe une utilisation d'une connaissance a priori de la physique de la machine pour adapter la complexité du réseau contrôleur à la tâche de contrôle. La tâche du réseau est alors d'apprendre les gains du contrôleur PID dépendants de l'état qui optimisent une fonction de coût dans des conditions environnementales données.

Le principal problème lié à l'optimisation est désormais établi. Soit un état initial $X_1$ et un état initial désiré

$$D_1 = [\dot{h}_{cmd(1)} \quad \dot{h}_{cmd(1)}]^T, \text{ minimiser la valeur attendue :}$$

$$E[J] = \int J \ p(X_1 \ldots X_T) \ dX_1 \ldots dX_T \ ,$$

$$[8]$$

$$\text{où} \quad J = J_E = \sum_{t=1}^{T} \alpha_h[h_{cmd(t)} - h_t]^2 + \alpha\dot{h}[\dot{h}_{cmd(t)} - \dot{h}_t]^2 ,$$

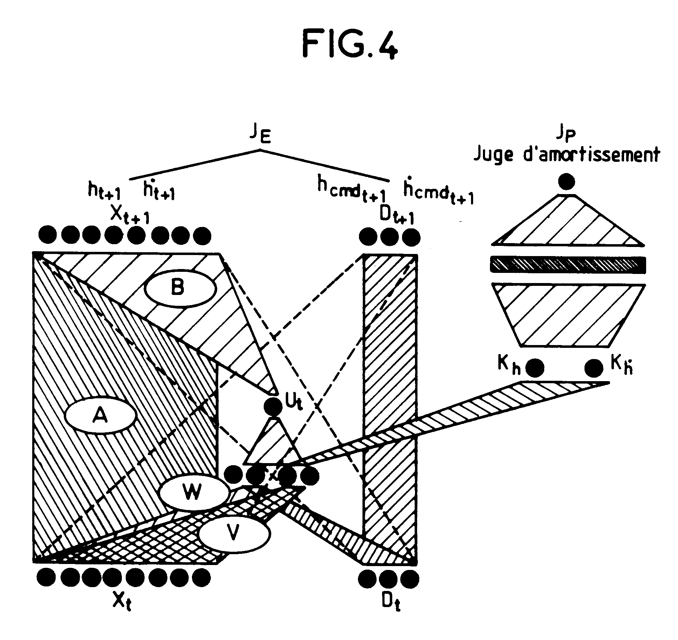

par rapport à $V$, $r$, $W$ et $q$. Il faut noter que la fonction de coût $E[J]$ attribue un coût à une loi de contrôle particulière ayant pour paramètres $V$, $r$, $W$ et $q$, et utilisant la connaissance d'un modèle de machine aléatoire décrit par la distribution $p(X_1 \ldots X_T)$. Remarquons que la fonction de coût quadratique $J$ est paramétrée par un choix arbitraire des paramètres $\alpha_{h'}$, $\alpha\cdot_h$ (où on utilisait $\alpha_h = \alpha\cdot_h = 1$). Une mise en oeuvre du réseau neuronal récurrent de la machine et du contrôleur est présentée à la Figure 4. Cette figure résume la relation décrite par les équations [1] à [7].

Comme nous l'avons déjà remarqué, la procédure d'optimisation peut également dépendre des contraintes de performance. L'exemple ci-après implique des contraintes de stabilité relative. Précisément, la solution sans contraintes présente des réponses de l'avion légèrement amorties durant le radioalignement de descente. Ici, une pénalisation pour "mauvais" amortissement est formulée.

En tenant compte de la machine linéaire pièce par pièce et considérant pour le moment les pondérateurs comme des constantes, l'avion peut avoir des réponses oscillatoires de courte durée de la forme $e^{-\varsigma wt} \cos(\sqrt{1-\varsigma^2}wt + \Phi)$, où $\varsigma$ est le facteur d'amortissement, $w$ une fréquence et $\Phi$ un angle de phase. Le facteur d'amortissement $\varsigma$ est particulièrement important car une petite valeur provoquera des oscillations persistantes dans le temps. Une analyse du plus petit facteur d'amortissement a été réalisée en testant la machine avec plusieurs valeurs appliquées aux paramètres de pondération du contrôleur. Ces informations sont ensuite utilisées pour former un réseau standard triant directement les "bons" et "mauvais" amortissements. Une valeur de $\varsigma$ supérieure à 0,4 est considérée comme "bonne" dans ce contexte.

Une fonction "pénalisation" est élaborée en utilisant la réponse d'un réseau destiné à "juger" l'amortissement. Tout d'abord, comme le montre la Figure 4, d'autres unités sont ajoutées au réseau afin de calculer les valeurs équivalentes à $K_h$ et $K_{\cdot h}$. Celles-ci sont entrées dans le réseau jugeant l'amortissement pour produire la valeur $\varsigma_{juge}$. La fonction de pénalisation est alors spécifiée comme suit à l'équation [9], et ajoutée à l'indice de performance pour être utilisée dans la minimisation de l'équation [8].

$$J_P = \sum_{t=1}^{T} Max(0, \varsigma_{juge} - \varsigma^*_{juge}) (\varsigma_{juge} - \varsigma^*_{juge}) \qquad [9]$$

$$\text{et } J = J_E + J_P$$

Dans l'équation 9, $\varsigma^*_{juge}$ est une valeur arbitraire (par exemple, 0,8). Noter que, quand $\varsigma_{juge} \leqq -\varsigma^*_{juge}$, il n'y a pas de pénalisation et que sinon, la pénalisation est quadratique. Le résultat attendu est que, grâce à la procédure de minimisation, les valeurs $K_h$ et $K_{\cdot h}$ restent dans une "bonne" zone d'amortissement.

Si $\sigma$ est grand, la pente du $S$ sigmoïdal de l'équation [7] s'accroît, et la réponse de commutation associée des unités $P$ devient pointue. Cette solution revient à diviser toute la trajectoire en une suite de machines linéaires, et à trouver la loi de contrôle linéaire optimale pour chaque machine linéaire de cette suite. Si $\sigma$ est modérément important (par exemple, environ 1), la commutation et le mélange non linaires des lois de contrôle linéaires, via les unités de commutation sigmoïdales, sont a priori autorisés par l'architecture. L'une des caractéristiques de cette invention réside dans cette solution commutation/mélange (par l'apprentissage de $V$ et de $q$) en tant que minimum possible pour la fonction de coût optimisée.

Les équations [2] à [7] décrivant la dynamique de la machine et du contrôleur ont été représentées dans un réseau illustré à la Figure 4, de même que la dynamique de la trajectoire de vol désirée. Il faut noter que le réseau obtenu comprend 6 pondérateurs pouvant être appris, pour chaque bloc contrôleur élémentaire : 3 pondérateurs PID plus 1 pondérateur de biais (pondérateurs $W$) et 2 pondérateurs pour les commutateurs (pondérateurs $V$). Les vecteurs d'état réel et désiré au moment $t+1$ sont retransmis aux couches d'entrée. Ainsi, grâce aux connexions recurrentes entre les couches d'entrée et de sortie, le réseau génère l'intégralité des trajectoires et peut être considéré comme un réseau récurrent par rétro-propagation. Le réseau apprend ainsi, en utilisant l'algorithme de retro-propagation compte tenu de la distribution des vents.

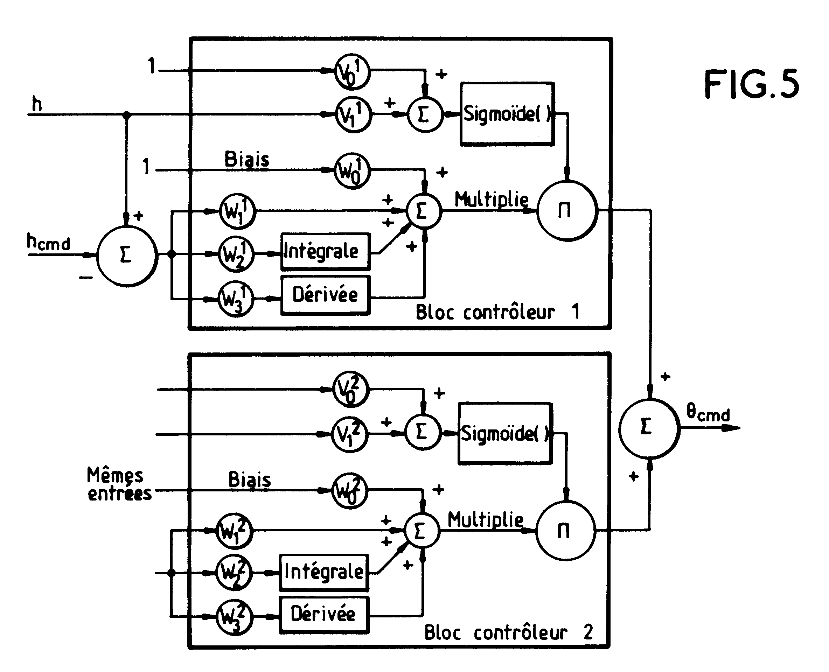

Les équations [2] à [7] décrivant la dynamique de la machine et du contrôleur sont représentées dans le réseau de la présente invention, de même que la dynamique de la trajectoire désirée. Un schéma d'un contrôleur à réseau neuronal à deux unités est montré à la Figure 5. Cette structure peut constituer le réseau principal utilisé pour contrôler les fonctions de radioalignement de descente et d'arrondi d'un avion. Cependant, comme cela sera expliqué plus bas, on peut utiliser plus de deux unités et obtenir ainsi un niveau de contrôle plus précis. Il faut noter que le réseau obtenu comprenant deux unités serait composé de 6 pondérateurs pouvant être appris pour chaque bloc contrôleur élémentaire : 3 pondérateurs PID plus 1 pondérateur de biais (pondérateurs $W$) et 2 pondérateurs des commutateurs (pondérateurs $V$). Les vecteurs d'état réel et désiré au moment $t+1$ sont retransmis aux couches d'entrée. Ainsi, grâce aux connexions récurrentes entre les couches d'entrée et de sortie, le réseau génère l'intégralité des trajectoires et peut être considéré comme un réseau récurrent par rétro-propagation. Le réseau peut ainsi apprendre en utilisant l'algorithme de rétro-propagation compte tenu de la distribution des vents. Fonctionnellement, on peut considérer que le réseau réalise une opération *proportionnelle plus intégrale plus dérivée* (PID) sur l'erreur d'altitude, les gains sur chaque terme étant déterminés par l'altitude via le commutateur sigmoïdal.

Comme exemple de réseau neuronal comprenant deux unités ayant le type de structure présentée à la Figure 5, des simulations ont été réalisées sur environ 50.000 atterrissages simulés dans diverses conditions de vents. Les résultats ont été obtenus en initialisant les réseaux de la manière suivante. Les gains de contrôle linéaire $W$ ont été fixés à 0, le pondérateur des commutateurs, $V$, étant soit aléatoire, soit représentatif d'un commutateur a *priori* basé sur la linéarité connue pièce par pièce du système de contrôle à modéliser. La simulation montre qu'une dynamique d'apprentissage dépend de l'initialisation du pondérateur mais que le plan de gains obtenu (donc, la performance) n'en dépend pas. Les résultats présentés ci-après ont été obtenus en initialisant les pondérateurs $V$ de diverses manières.

De façon spécifique, le réseau a appris avec une distribution sélectionnée H de paramètres de vents (1 à H = -10, 4 à H = 0, 4 à H = 10, 3 à H = 20, 2 à H = 30 et 1 à H = 40). La variable H représente le vent moyen au début du radioalignement de descente en ajoutant des rafales et avec des coupures de vent (c'est-à-dire vents réduits) à diverses altitudes. Différentes stratégies d'apprentissage ont été expérimentées pour le réseau de test. En premier, le réseau a été formé sur toute la trajectoire de vol pendant toute la période d'apprentissage. Dans la seconde stratégie, le réseau a été formé sur des parties de plus en plus importantes de la trajectoire en commençant à 200 pieds AGL. Dans la troisième, le réseau a été formé sur des parties croissantes de la trajectoire complète environ au point d'arrondi de 45 pieds. Ces stratégies ont modifié le mode d'exposition du réseau vis-à-vis des diverses caractéristiques de la machine.

La forme exacte des pondérateurs de commutateurs V appris dépend donc de ces stratégies (mais pas autant que le plan de gains obtenu). Les résultats présentés ci-après sont issus de la première stratégie qui semble offrir les meilleures caractéristiques d'apprentissage. Cependant, il faut considérer que les seconde et troisième stratégies présentées précédemment peuvent produire des résultats très différents ; en fait, elles peuvent même offrir de meilleurs résultats. Néanmois, elles n'ont pas été simulées dans la même mesure que l'apprentissage sur la trajectoire complète. L'erreur quadratique des sorties accumulées et la variable de rapport d'altitude $h$ ont été calculées durant toute la trajectoire en fonction de la position au sol. Après la partie formation, la performance du contrôleur de réseau a été testée dans diverses conditions de vent. Les statistiques ont été calculées sur 1000 atterrissages d'essai et sont présentées dans le tableau ci-après.

EP 0 505 236 A2

| | Réseau contraint | | | | | | | | |
|---|---|---|---|---|---|---|---|---|---|
| | Performance globale | | Erreur quadr.moy. Autoalign. desc. | | Erreur quadr.moy. Arrondi | | Performance point contact sol | | |
| Vent | $J/T$ | $T$ | $J : h_{gs}$ | $J : h_{gs}$ | $J : h_{fl}$ | $J : h_{fl}$ | $x_{TD}$ | $\tilde{O}_{TD}$ | $h_{TD}$ |
| H = −10 | 1,34 (0,56) | 21,6 (0,047) | 13,500 (9,8) | 4,230 (2,6) | 8,50 (4,4) | 2,67 (1,2) | 1030 (11) | 0,0473 (0,0039) | −2,15 (0,052) |
| H = 0 | 0,27 (0,00) | 22,2 (0,000) | 0,603 (0,0) | 0,209 (0,0) | 3,31 (0,0) | 1,86 (0,0) | 1080 (0) | −0,0400 (0,0000) | −1,98 (0,0000) |
| H = 10 | 0,96 (0,53) | 23,0 (0,052) | 12,500 (9,2) | 4,390 (2,6) | 3,17 (2,2) | 2,01 (1,1) | 1160 (12) | −0,1260 (0,0046) | −1,79 (0,040) |
| H = 20 | 3,56 (2,10) | 23,8 (0,100) | 54,000 (38,0) | 18,500 (11,0) | 8,65 (8,2) | 3,43 (2,7) | 1230 (24) | −0,2170 (0,0100) | −1,64 (0,0611) |
| H = 30 | 8,03 (4,70) | 24,6 (0,160) | 130,000 (91,0) | 43,200 (25,0) | 19,20 (19,0) | 5,73 (4,7) | 1310 (39) | −0,3110 (0,0170) | −1,50 (0,076) |
| H = 40 | 13,40 (7,80) | 25,5 (0,220) | 219,000 (150,0) | 76,200 (46,0) | 37,00 (36,0) | 9,24 (8,0) | 1400 (54) | −0,4030 (0,0230) | −1,39 (0,083) |

Ce tableau présente la valeur des moyennes et écarts-types pour les variables calculées sur 1000 atterrissages simulés, dans cinq situations de vents différentes, dans le cas d'un contrôleur à réseau neuronal à deux unités tel que celui de la Figure 5. L'objectif de minimisation de l'indice de performance sur toute la trajectoire est atteint avec un contrôleur à deux unités et, par comparaison, un contrôleur classique de technologie antérieure aurait un coût quadratique très élevé durant la phase d'arrondi à cause de l'autocabrage important au point d'arrondi.

Le rapport d'altitude au point de contact au sol, pour le dispositif de la Figure 5, se situe entre les limites nominales dans un intervalle de -10 à +40, quelles que soient les conditions de vents. On peut exprimer la performance globale comme le coût quadratique $J$ par étape de temps, $T$ étant le moment de l'atterrissage. Une mesure de la performance de trajectoire pour le radioalignement de descente et l'arrondi, les coûts quadratiques $J$ pour l'altitude $h$ et le rapport d'altitude $\dot{h}$, une mesure de la performance d'atterrissage, de la performance au sol et du point de contact au sol $X_{TD}$, de l'angle d'inclinaison longitudinale $\Theta_{TD}$ et du rapport d'altitude au point de contact $\dot{h}_{TD}$ sont également présentées dans ce tableau.

A partir des pondérateurs "appris" par le réseau, l'équation [7] exposée précédemment produit le gain d'un contrôleur "équivalent" pour la totalité de la trajectoire, générant ainsi ce qu'on appelle les "plans de gains". Les plans de gains obtenus représentent l'évolution optimale des pondérations de contrôle. Ils représentent également la performance optimale compte tenu d'un indice de performance donné J. Par conséquent, le commutateur élabore une transition sans à-coup entre le radioalignement de descente et l'arrondi, et alimente le réseau contrôleur qui obéit à une loi de contrôle distribuée non linéaire pour toute la trajectoire. L'indice de performance augmenté et son optimisation au sein d'une architecture de réseau accrue peuvent être utilisés pour fournir une solution à la situation d'atterrissage d'un avion.

L'architecture augmentée de la présente invention permet également l'amortissement du contrôle. En général, la performance de contrôle intégrée optimale, avec des contraintes sur les caractéristiques des réponses d'une machine, n'est pas une simple tâche qui peut être apprise de manière heuristique par n'importe quel réseau, ou qui peut être utilisée dans un équipement classique non neuronal. L'approche de réseau neuronal de cette invention, ainsi que l'apprentissage par rétro-propagation, représentent une solution élégante au problème de génération d'une performance optimale de contrôle. En outre, le gain de contrôle peut être défini de façon à minimiser l'indice objectif de performance alors que la machine reste dans une zone de stabilité souhaitée. Ceci permet des plans de gains de contrôle et un amortissement augmenté qui rendent la machine relativement insensible aux perturbations.

Evidemment, de nombreuses modifications et adaptations de la présente invention sont possibles à la lumière des informations précédentes. Il faut donc comprendre que, dans le cadre des revendications jointes, l'invention peut être mise en pratique autrement que selon la description particulière donnée ici.

## Revendications

1. Réseau structuré pour le contrôle de l'atterrissage d'un avion, comprenant :

    plusieurs moyens d'entrée par capteurs, pour fournir les signaux indicatifs au moins de la vitesse, de l'angle d'attaque, du taux de l'angle d'inclinaison longitudinale, de l'angle d'inclinaison longitudinale, du rapport d'altitude et de l'altitude de l'avion ;

    plusieurs blocs contrôleurs élémentaires, chacun d'eux étant couplé auxdits moyens d'entrée par capteurs, pour accepter lesdits signaux d'entrée et fournir une sortie issue de chaque bloc, basée sur une pondération de chacun des signaux d'entrée ; et

    un moyen de sommation pour sommer les sorties desdits blocs contrôleurs, basée sur un pondérateur fourni par chacun desdits blocs contrôleurs élémentaires.

2. Dispositif selon la Revendication 1 caractérisé en ce que lesdits blocs contrôleurs élémentaires comprennent également des moyens pour modifier la pondération desdits signaux d'entrée à partir de variables d'état.

3. Dispositif selon la Revendication 2 caractérisé en ce que ledit bloc contrôleur élémentaire comprend :
    un moyen de traitement pour traiter lesdits signaux d'entrée.

4. Dispositif selon la Revendication 3 caractérisé en ce que plusieurs blocs contrôleurs élémentaires sont gérés par un seul processeur.

5. Dispositif selon la Revendication 3, comprenant également :
des processeurs multiples.

6. Dispositif selon la Revendication 5 caractérisé en ce qu'au moins l'un desdits processeurs gère un seul desdits blocs contrôleurs élémentaires.

7. Réseau structuré pour le contrôle de systèmes complexes, comprenant :
plusieurs moyens d'entrée par capteurs pour fournir des signaux indicatifs de variables multiples utilisées pour donner des informations telles que l'état en cours dudit système complexe ;
plusieurs blocs contrôleurs élémentaires, chacun étant couplé auxdits moyens d'entrée par capteurs, pour accepter lesdits signaux d'entrée et fournir une sortie issue de chaque bloc, basée sur une pondération de chacun des signaux d'entrée ; et
un moyen de sommation pour sommer les sorties desdits blocs contrôleurs, basée sur une pondération fournie par chacun desdits blocs contrôleurs élémentaires.

8. Dispositif selon la Revendication 7 caractérisé en ce que lesdits blocs contrôleurs élémentaires comprennent également :
des moyens pour modifier la pondération desdits signaux d'entrée à partir de variables d'état.

9. Dispositif selon la Revendication 8 caractérisé en ce que ledit bloc contrôleur élémentaire inclut également :
un moyen de traitement pour traiter lesdits signaux d'entrée.

10. Dispositif selon la Revendication 9 caractérisé en ce que plusieurs blocs contrôleurs élémentaires sont gérés par un seul processeur.

11. Dispositif selon la Revendication 8, comprenant en outre :
des processeurs multiples.

12. Dispositif selon la Revendication 11 caractérisé en ce qu'au moins l'un desdits processeurs gère un seul desdits blocs contrôleurs élémentaires.

13. Dispositif selon la Revendication 8 caractérisé en ce que le moyen de modification de la pondération desdits signaux d'entrée est un contrôleur P.I.D.

14. Dispositif selon la Revendication 2 caractérisé en ce que le moyen de modification de la pondération desdits signaux d'entrée est un contrôleur P.I.D.

# FIG.1

**Au début de l'arrondi** :

Altitude : $h = h_f$

Rapport d'altitude : $\dot{h} = \dot{h}_f$

Vitesse : $V = V_f$

**A l'atterrissage** :

Altitude : $h_{TD} = 0$

Rapport d'altitude : $0 < \dot{h}_{min} < \dot{h}_{TD} < \dot{h}_{max}$

Position : $x_{min} < x_{TD} < x_{max}$

Angle d'inclinaison : $\theta_{min} < \theta_{TD} < \theta_{max}$
longitudinale

Altitude h

début d'arrondi

Angle de radioalignement de descente : $\gamma_{gs}$

point de contact au sol

position x

Point d'interception prévu par le radioalignement de descente

$x_{min}$    $x_{TD}$    $x_{max}$

## FIG. 2

EP 0 505 236 A2

# FIG.3

Entrées des tâches et Sorties des processus

Pondérateur — V

Commutateur de saturation

Sigmoïde ( )

Pondérateur — W

Multiplie — ∏

Bloc contrôleur élémentaire

Dupliqué i = 1,...,n

Σ

+ + +

Signaux de contrôle

EP 0 505 236 A2

# FIG.4

FIG.5

# FIG. 6

EP 0 505 236 A2